# EUROPÄISCHE PATENTSCHRIFT

(11) **EP 0 833 461 B1**
(45) Veröffentlichungstag und Bekanntmachung des Hinweises auf die Patenterteilung: **26.07.2000**
(21) Anmeldenummer: 96115498.6
(22) Anmeldetag: 26.09.1996
(51) Int. Cl.: H04B 7/10

(54) **Empfangseinrichtung mit Polarisationsdiversity für rahmenorientierte Mobilkommunikationssysteme**
Polarization diversity receiver unit for frame-based mobile communication systems
Dispositif de réception avec diversité de polarisation pour systèmes de communication basés sur des trames

(43) Veröffentlichungstag der Anmeldung: 01.04.1998
(73) Patentinhaber: SIEMENS AKTIENGESELLSCHAFT, 80333 München (DE)
(72) Erfinder: Färber, Michael, Dipl.-Ing., 82515 Wolfratshausen (DE); Emmer, Dieter, Dipl.-Ing., 82110 Germering (DE); Ivanov, Kolio, Dr. Ing., 81369 München (DE); Weber, Peter, Dipl.-Ing., 81373 München (DE); Sokat, Jörg, Dr. Ing., 81379 München (DE)

(56) Entgegenhaltungen:
- EP-A- 0 124 319
- DE-A- 3 536 169
- PATENT ABSTRACTS OF JAPAN vol. 010, no. 082 (E-392), 2.April 1986 & JP 60 226226 A (MATSUSHITA), 11.November 1985,
- PATENT ABSTRACTS OF JAPAN vol. 006, no. 042 (E-098), 16.März 1982 & JP 56 158540 A (NISSAN MOTOR CO), 7.Dezember 1981,
- PATENT ABSTRACTS OF JAPAN vol. 012, no. 423 (E-680), 9.November 1988 & JP 63 158922 A (NEC ), 1.Juli 1988,

## Beschreibung

Die Erfindung betrifft eine Empfangsstation für rahmenorientierte Mobil-Kommunikationssysteme. Ein solches Mobil-Kommunikationssystem sieht beispielsweise ein Zeitmultiplex-Verfahren für eine Funkschnittstelle vor, wobei die zu übertragenden Daten in Funkblöcken - Rahmen - organisiert sind und ein Rahmen einer Zeitlage oder einer Vielzahl von Zeitrahmen entspricht.

Mobil-Kommunikationssysteme ermöglichen den Aufbau von Kommunikationsverbindungen zu mobilen Teilnehmern, indem Informationen über eine Funkschnittstelle übertragen werden. Sind mehrere Teilnehmer auf der gleichen Trägerfrequenz dieser Funkschnittstelle durch unterschiedliche Zeitlagen getrennt, liegt ein Zeitmultiplex-Mobil-Kommunikationssystem vor. Das Zeitmultiplexverfahren wird auch TDMA (Time Division Multiple Access)-Verfahren genannt. Ein solches Mobil-Kommunikationssystem ist beispielsweise das bekannte digitale GSM-Mobilfunksystem.

Zusätzlich oder alternativ zum Zeitmultiplex können auf der Funkschnittstelle auch weitere Verfahren zum Separieren der Teilnehmer angewendet werden. Beim GSM-Mobilfunksystem wird zusätzlich zum Zeitmultiplex ein Frequenzmultiplex angeboten, es kann sich bei den Verfahren zum Separieren der Teilnehmer jedoch auch um ein Codemultiplex (CDMA)-Verfahren handeln. Alternativ kann das Mobil-Kommunikationssystem als ein digitales Frequenzmultiplex-Kommunikationssystem ausgeprägt sein, bei dem die zu übertragenden Daten in einer rahmenorientierten Datenstruktur organisiert sind.

In einer typischen Einsatzumgebung eines Mobil-Kommunikationssystems, z.B. eines GSM-Mobilfunksystems, unterliegen die übertragenen Informationen auf der Funkschnittstelle unterschiedlichsten Störungen. Die von einer Sendestation gesendeten Informationen erreichen eine Empfangsstation über verschiedene Ausbreitungswege, so daß sich bei der Empfangsstation die Signalkomponenten verschiedener Ausbreitungswege überlagern. Zudem können Abschattungen die Übertragung von Informationen von einer Sendestation zur Empfangsstation erheblich behindern. Auch Störer im Frequenzband der Funkschnittstelle führen zu einer Beeinträchtigung der Qualität der empfangenen Signale.

Weiterhin ist zu beachten, daß sich bei einer Funkausbreitung mit jeder Reflektion oder Beugung die Polarisationsrichtung der jeweiligen Signalkomponente ändert. So führt eine Abweichung zwischen der Polarisationsrichtung der Antenneneinrichtung einer Empfangsstation im Vergleich zur Polarisationsrichtung der einfallenden Welle zu zusätzlichen Verlusten.

Die bevorzugte Polarisationsrichtung beim Mobilfunk ist die Vertikalpolarisation. Diese Polarisationsebene ist günstiger als eine horizontale, da die meisten Reflektoren auch eine Vertikalstruktur besitzen, wodurch eine geringe Depolarisation bei einer solchen Reflektion auftritt. In Gebieten mit starker Bebauung kann festgestellt werden, daß in der'horizontalen Ebene ein bis zu 20 dB schwächeres Signal gemessen wird. D.h., trotz Reflektionen in bebauten Gebieten ist der Vertikalanteil im Empfangssignal dominant. In Gebieten mit Bewuchs ist die Reflektion viel diffuser. Messungen in der Horizontalebene ergaben unter solchen Bedingungen einen Empfangspegel, der nur unwesentlich kleiner ist, als in der vertikalen Ebene. Grundlage dieser Messung ist eine vertikal angeordnete Antenne der bewegten Mobilstation.

In den aktuellen Mobilfunknetzen ist ein Anteil von Handheldgeräten von bis zu 90% üblich. Handheldgeräte werden von den Nutzern in beliebigen Handhaltungen, Sitz- oder Standpositionen genutzt. Die bevorzugte Polarisationsebene des Handheld kann sich während der Nutzung beliebig verändern. Somit existiert keine definierte Vorzugspolarisation der Mobilstation. Dadurch können Variationen in der Empfangsfeldstärke von bis zu 20 dB auftreten. Die Polarisationsebene der Basisstationsantenne ist üblicherweise eine Vertikalpolarisation.

Es ist aus der Europäischen Patentschrift EP 0 124 319 A1 bekannt, zur Verbesserung des Empfangs Einrichtungen zum Polarisationsdiversity zu verwenden. Zwei Antennen unterschiedlicher Polarisation versorgen eine Empfangsstation mit Empfangssignalen, die durch die unterschiedliche Polarisation zumindest teilweise dekorreliert sind. Die Empfangsstation kann daraufhin eine Auswahl aus den Empfangssignalen treffen.

Der Erfindung liegt daher die Aufgabe zugrunde, eine Empfangsstation mit verbesserter Nachführung der Polarisationsrichtung anzugeben. Diese Aufgabe wird durch die Empfangsstation nach den Merkmalen des Patentanspruchs 1 gelöst. Vorteilhafte Ausgestaltungen sind den Unteransprüchen zu entnehmen.

Die Empfangsstation für rahmenorientierte Mobil-Kommunikationssysteme weist erfindungsgemäß mindestens zwei, vorzugsweise drei oder mehr, Antenneneinrichtungen unterschiedlicher Polarisationsrichtungen, mindestens zwei mit unterschiedlichen Antenneneinrichtungen verbundene Empfangseinrichtungen zum Abgeben von aufbereiteten Empfangssignalen, mindestens einen Kombinator zur Erzeugung eines Summensignals aus den Empfangssignalen, eine Auswerteeinrichtung zur Auswertung des Summensignals und eine Steuereinrichtung zum derartigen Steuern der Verbindung der Empfangseinrichtungen mit den Antenneneinrichtungen, daß die das qualitativ schlechtere Empfangssignal abgebende Empfangseinrichtung zyklisch mit anderen Antenneneinrichtungen verbunden wird, auf.

Durch diese Empfangsstation wird ein Polarisationsscanning möglich, da eine Empfangseinrichtung benutzt werden kann, um zyklisch weitere Antenneneinrichtungen unterschiedlicher Polarisation abzutasten, die möglicherweise ein qualitativ besseres Empfangssignal empfangen. Dazu wird diese Empfangseinrichtung mit einer Antenneneinrichtung verbunden, und ein Vergleich dieses Empfangssignals mit dem bisher ausgewählten Empfangssignal durchgeführt. Das qualitativ bessere Empfangssignal wird, ggf. unter Hinzunahme weiterer Empfangssignale im Kombinator zur Erzeugung eines Summensignals verarbeitet und einer Auswerteeinrichtung zur weiteren Auswertung zugeführt.

Wird festgestellt, daß die "scannende" Empfangseinrichtung ein Empfangssignal mit besserer Qualität als das bis dahin beste Empfangssignal empfängt, dann wird das nunmehr beste Empfangssignal auf dieser Empfangseinrichtung gehalten und mit dieser Empfangseinrichtung nicht weiter gescannt. Damit wird wiederum eine Empfangseinrichtung freigesetzt, die erneut die verschiedenen Polarisationsrichtungen auf den verbleibenden Antenneneinrichtungen scannen kann.

Zur qualitativen Beurteilung von Empfangssignalen können beispielsweise die Bitfehlerraten, das Signal/Rauschverhältnis und/oder das Verhältnis von Trägersignal zu Störsignal verwendet werden. Dies geschieht beispielsweise entsprechend einer Weiterbildung der Erfindung in einer Einrichtung zum Bewerten der Qualität der Empfangssignale. Diese Einrichtung kann sowohl im Kombinator als auch in der Steuereinrichtung realisiert werden. Auch der Signalpegel kann zur qualitativen Beurteilung ausgewertet werden.

Entsprechend einer weiteren Ausgestaltung der Erfindung nimmt die Kombinationseinrichtung eine Selektion des qualitativ besseren Empfangssignales vor oder erzeugt das Summensignal durch eine additive Verknüpfung von zumindest zwei Empfangssignalen. Die additive Verknüpfung der Empfangssignale erfolgt dabei vorteilhafterweise nach Betrag und Phase.

Die Verbindung der Empfangseinrichtungen mit den Antenneneinrichtungen erfolgt vorteilhafterweise über Schalteinrichtungen, die entsprechend der Rahmenstruktur des Mobil-Kommunikationssystems geschalten werden. Im weiteren werden die Zeitlagen eines Zeitmultiplex-Verfahrens als die Rahmen angesehen, ohne damit die Allgemeinheit der Erfindung einzuschränken. D.h. ein Umschalten des Signalpfades mit der besten Qualität erfolgt während der Schutzabstände zwischen zwei Zeitlagen, wodurch eine Beeinträchtigung der Empfangsqualität durch Schaltstörungen gering gehalten wird. Während der Schutzzeit zwischen zwei Zeitlagen wird üblicherweise auf der Sendeseite die abgestrahlte Leistung verringert.

Entsprechend einer Vorzugsvariante kann jede der Schalteinrichtungen die Verbindung von einer Empfangseinrichtung zu jeder Antenneneinrichtung herstellen. Damit ist es möglich, mit einem geringen Satz von Antenneneinrichtungen, beispielsweise drei oder vier auszukommen, die durch alle, beispielsweise zwei, Empfangseinrichtungen genutzt werden können.

Das zyklische Scannen der Empfangseinrichtung mit qualitativ schlechteren Empfangssignal erfolgt vorzugsweise zeitlagenabhängig, während der Schutzzeit zwischen zwei Zeitlagen. Entsprechend einer weiteren vorteilhaften Ausgestaltung der Erfindung wird eine Aussage über die Qualität des Empfangssignals erst nach Beobachtung einer bestimmten Zeitspanne getroffen. Beispielsweise durch Mittelung des Signal/Rauschverhältnisses oder durch Angabe der Bitfehlerrate für einen Funkblock steht eine Prüfgröße zur Einschätzung der Qualität des Empfangssignals zur Verfügung.

Eine Dekorrelation zwischen den Antenneneinrichtungen kann zusätzlich dadurch erreicht werden, daß diese räumlich getrennt sind. Zumindestens einzelne Antenneneinrichtungen haben somit keinen gemeinsamen geometrischen Mittelpunkt, sondern sind durch eine bestimmte Distanz getrennt. Zusätzlich zum Einfluß der Polarisations-Diversity ist damit ein Raum-Diversity-Empfang möglich. Mit Hilfe des Raum-Diversity wird durch diese vorteilhafte Ausgestaltung einem u.U. negativen Mehrwegeeinfluß entgegengewirkt.

Unter der Annahme, eines reziproken Verhaltens in Empfangs- und Senderichtung, d.h. für eine Kommunikationsverbindung zwischen zwei Funkstationen unterliegen beide Richtungen trotz u.U. unterschiedlicher Trägerfrequenz den gleichen Störungen und Mehrwegeausbreitungen, sieht eine weitere vorteilhafte Ausgestaltung der Erfindung vor, daß die Steuereinrichtung auch zur Steuerung der Verbindung zwischen den Sendeeinrichtungen und den Antenneneinrichtungen vorgesehen ist. Dies bedeutet, daß auch die Abstrahlung durch eine die Empfangsstation beinhaltende Funkstation auf eine verbesserte Polarisationsrichtung einstellbar ist.

Es kann weiterhin vorgesehen sein, daß durch die Steuereinrichtung nicht nur zwischen mehreren fest eingestellten Antenneneinrichtungen unterschiedlicher Polarisation umgeschalten wird, sondern daß diese Antenneneinrichtungen unterschiedlicher Polarisation auf elektronischem Wege eingestellt werden. Dies bedeutet, daß die Steuereinrichtung durch das elektronische Einstellen der Polarisationsrichtung einer Antenneneinrichtung bewirkt, daß der mit der Antenneneinrichtung verbundenen Empfangseinrichtung Empfangssignale unterschiedlicher Polarisationsrichtungen zugeführt werden. Eine physische Antenneneinrichtung kann damit mehrere Antenneneirichtungen im Sinne der Erfindung realisieren. Damit ergibt sich jedoch ein erhöhter Steuerungsaufwand.

Die Erfindung soll im folgenden anhand von zeichnerischen Darstellungen durch mehrere Ausführungsbeispiele näher erläutert werden.

Dabei zeigen
- FIG 1: ein Mobil-Kommunikationssystem,
- FIG 2: eine Empfangsstation mit vier Antenneneinrichtungen unterschiedlicher Polarisation an einem Ort,
- FIG 3: eine Empfangsstation mit vier Antenneneinrichtungen unterschiedlicher Polarisation an zwei räumlich getrennten Orten, und
- FIG 4: eine Funkstation mit Anpassung der Polarisation für den Empfangs- und Sendefall.

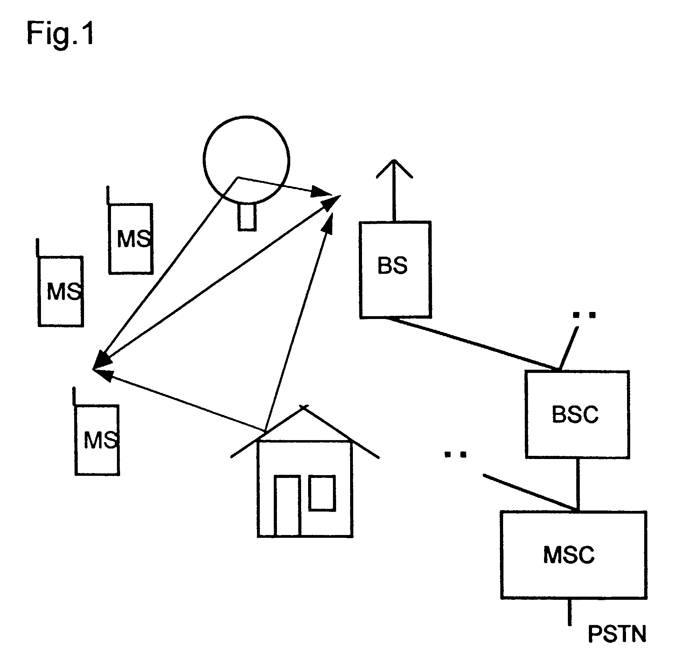

Das in FIG dargestellte Mobil-Kommunikationssystem ist ein bekanntes GSM-Mobilfunksystem, das aus einer Vielzahl von Mobilvermittlungsstellen MSC besteht, die untereinander vernetzt sind bzw. den Zugang zu einem Festnetz PSTN herstellen. Weiterhin sind diese Mobil-Vermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Nachrichtenverbindung zu Mobilstationen MS aufbauen kann. In FIG 1 ist beispielhaft eine solche Funkverbindung zu einer Mobilstation MS dargestellt.

Die Funkschnittstelle zwischen Basisstation BS und Mobilstation MS ist nach dem Zeitmultiplexverfahren organisiert. Auf einer Trägerfrequenz werden so beispielsweise acht Zeitlagen bereitgestellt, die für verschiedene Kommunikationsverbindungen und zur Organisation der Funkschnittstelle genutzt werden können. Stellt eine Basisstation auch mehrere Trägerfrequenzen bereit, liegt zusätzlich ein Frequenzmultiplex vor.

Die Kommunikationsverbindung zwischen Basisstation BS und Mobilstation MS unterliegt einer Mehrwegeausbreitung, die durch Reflektionen beispielsweise an Gebäuden oder Bepflanzungen zusätzlich zum direkten Ausbreitungsweg hervorgerufen werden. Geht man von einer Bewegung der Mobilstation MS aus, dann führt die Mehrwegeausbreitung zusammen mit weiteren Störungen dazu, daß bei der empfangenden Basisstation BS, im weiteren Empfangsstation genannt, sich die Signalkomponenten der verschiedenen Ausbreitungswege unterschiedlicher Polarisationsrichtungen zeithängig überlagern und es zu Auslöschungserscheinungen kommt.

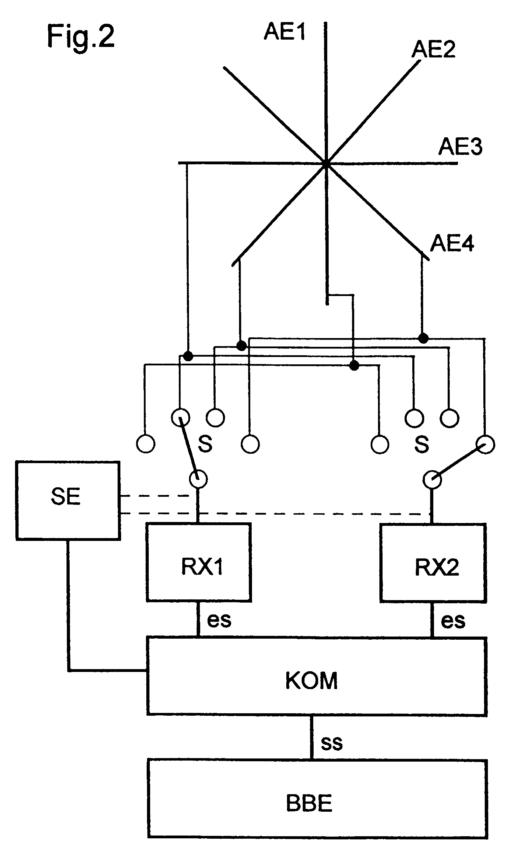

Eine Empfangsstation nach FIG 2 kann erfindungsgemäß den Empfang der Empfangsstation wesentlich verbessern. Dazu besteht diese Empfangsstation beispielsweise aus vier Antenneneinrichtungen AE1 bis AE4, die durch ihr Form und/oder Anordnung unterschiedliche Polarisationsrichtungen aufweisen. Beispielsweise sind die Polarisationsrichtungen der Antenneneinrichtungen AE1 bis AE4 jeweils zueinander um 45 Grad gedreht. Bei der Auswahl der Polarisationsrichtungen ist darauf zu achten, daß bei einer geringen Anzahl von Antenneneinrichtungen eine möglichst große Dekorrelation der Empfangssignale im Vergleich zu den anderen Antenneneinrichtungen gewahrt bleibt.

Weiterhin enthält die Empfangsstation zwei Empfangseinrichtungen RX1 und RX2, die jeweils mit einem Schalter S verbunden sind. Diese Schalter S können die jeweilige Empfangseinrichtung RX1, RX2 mit jeweils einer der vier Antenneneinrichtungen AE1 bis AE4 verbinden. Die Schalter S werden dabei durch eine Steuereinrichtung SE gesteuert. In den Empfangseinrichtungen RX1, RX2 werden die von den Antenneneinrichtungen AE1 bis AE4 aufgenommenen Signale aufbereitet. Diese Aufbereitung besteht beispielsweise darin, daß diese Signale ins Basisband übertragen werden. Somit geben die Empfangseinrichtungen RX1 und RX2 Empfangssignale es ab.

Diese Empfangssignale es werden von einem Kombinator KOM aufgenommen und zu einem Summensignal ss verarbeitet. Diese Verarbeitung kann beispielsweise darin bestehen, daß das qualitativ bessere Empfangssignal es ausgewählt wird, oder eine Addition nach Betrag und Phase beider Empfangssignale es zum Summensignal ss erfolgt. Es können darüberhinaus auch andere allgemein bekannte Verfahren zur Verknüpfung von mehreren Signalen angewandt werden.

In einer Auswerteeinrichtung BBE wird das Summensignal ss ausgewertet, was beispielsweise der Entzerrung und Signaldetektionen im Basisband einer GSM-Empfangsstation entspricht.

Die Steuereinrichtung SE weist eine Verbindung zum Kombinator KOM auf, wodurch es der Steuereinrichtung SE möglich ist, die Schalter S derart zu steuern, daß die das qualitativ schlechtere Empfangssignal es abgebende Empfangseinrichtung, beispielsweise RX1, zyklisch mit anderen Antenneneinrichtungen AE1 bis AE3 verbunden wird. Der Zyklus kann gleichbleibende Zeitabstände betreffen oder z.B. abhängig von den Übertragungsbedingungen einstellbar sein.

Wie in FIG 2 angegeben, ist die zweite Empfangseinrichtung RX2 mit der vierten Antenneneinrichtung AE4 verbunden und empfängt von dieser Antenneneinrichtung AE4 ein Signal, daß sie zum qualitativ besten Empfangssignal es verarbeiten kann. Wird beispielsweise durch eine Einrichtung zum Bewerten der Qualität der Empfangssignale es, die im Kombinator KOM angesiedelt ist, festgestellt, daß während des zyklischen Scannens der ersten Empfangseinrichtung RX1 durch diese ein qualitativ besseres Empfangssignal es abgegeben wird (in FIG 2 von Antenneneinrichtung AE3), so kann während der nächsten Schutzzeit zwischen zwei Zeitlagen, der dominante Signalpfad auf die erste Empfangseinrichtung RX1 geschalten werden. In Folge übernimmt die zweite Empfangseinrichtung RX2 die Aufgabe des Polarisationsscanning, indem wiederum zyklisch die verbleibenden Antenneneinrichtungen AE1, AE2 und AE4 mit dieser zweiten Empfangseinrichtung RX2 verbunden werden.

Es ist ebenso möglich, zur Bewertung der Qualität eines Empfangssignales es mehrere Funkblöcke zu betrachten. Vorzugsweise erfolgt das Umschalten des scannenden Schalters S während der Schutzzeiten zwischen zwei Zeitlagen.

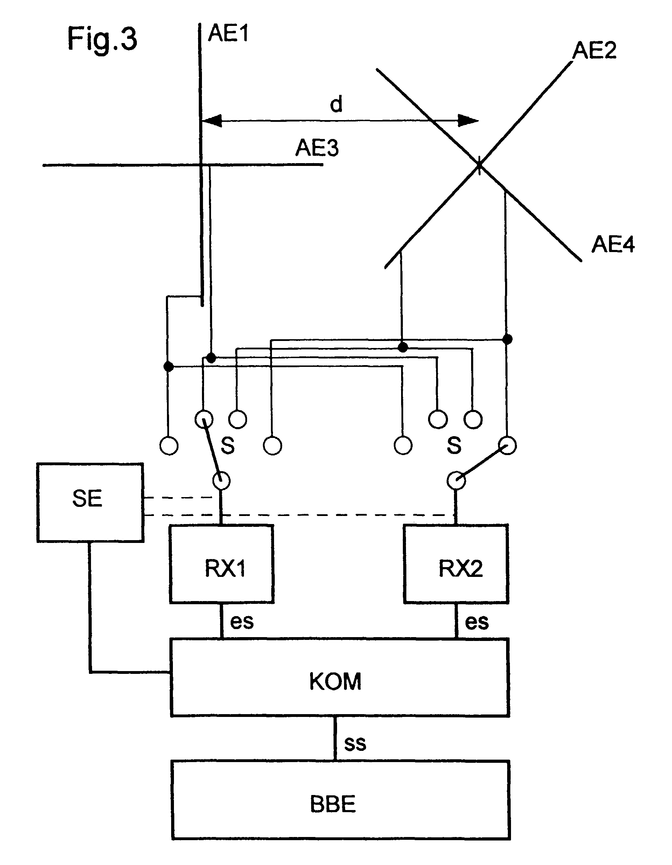

FIG 3 zeigt eine Empfangsstation, die gegenüber der Empfangsstation nach FIG 2 dahingehend modifiziert wurde, daß die Antenneneinrichtungen AE1 und AE3 gegenüber den Antenneneinrichtungen AE2 und AE4 räumlich getrennt sind. Die räumliche Trennung kann dadurch charakterisiert werden, daß die geometrischen Mittelpunkte der Antenneneinrichtungen nicht übereinstimmen, sondern durch eine Distanz d getrennt sind. Die Funktionsweise dieser Empfangsstation in Bezug auf das Schalten und Auswerten der Signale erfolgt äquivalent zu dem bisher geschilderten Verfahren.

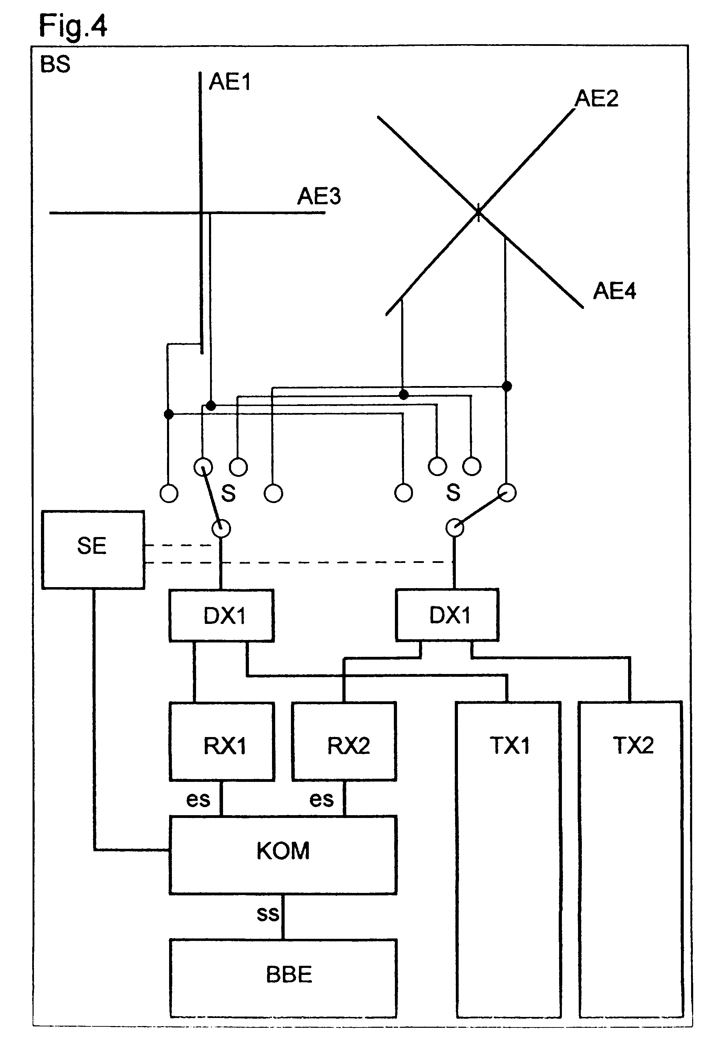

FIG 4 gibt eine beispielhafte Basisstation BS an, die die Empfangsstation nach FIG 3 beinhaltet und zusätzlich Sendeeinrichtungen TX1 und TX2 umfaßt. Der bisher geschilderte Empfangsfall wird nun um den Sendefall erweitert, so daß die Antenneneinrichtungen AE1 bis AE4 nicht nur mit den Empfangseinrichtungen RX1, RX2, sondern auch mit den Sendeeinrichtungen TX1, TX2 verbindbar sind. Diese Verbindung erfolgt über Duplexer DX1 und DX2.

Die Steuereinrichtung SE ist nach FIG 4 derart ausgestaltet, daß unter Kenntnis der für den Empfangsfall festgestellten günstigsten Polarisationsrichtung bzw. der damit korrespondierenden Antenneneinrichtung AE3, AE4, diese Antenneneinrichtung AE3, AE4 auch für den Sendefall genutzt wird. Für eine Kommunikationsverbindung wird somit die gleiche Antenneneinrichtung AE3, AE4 sowohl für das Empfangen, als auch für das Senden genutzt.

## Patentansprüche

1. Empfangsstation für rahmenorientierte Mobil-Kommunikationssysteme
- mit mindestens zwei Antenneneinrichtungen (AE1, AE2, ..) unterschiedlicher Polarisationsrichtungen,
- mit einer Empfangseinrichtung (RX1) zum Abgeben von aufbereiteten Empfangssignalen (es), die mit den Antenneneinrichtungen (AE1, AE2, ..) verbindbar ist,
**gekennzeichnet durch,**
- zumindest eine weitere Empfangseinrichtung (RX2, ..) zum Abgeben von aufbereiteten Empfangssignalen (es), die ebenfalls mit den Antenneneinrichtungen (AE1, AE2, ..) verbindbar ist,
- mindestens einen Kombinator (KOM) zur Erzeugung eines Summensignals (ss) aus den Empfangssignalen (es),
- eine Auswerteeinrichtung (BBE) zur Auswertung des Summensignals (ss), und
- eine Steuereinrichtung (SE) zum derartigen Steuern der Verbindung der Empfangseinrichtungen (RX1, RX2, ..) mit den Antenneneinrichtungen (AE1, AE2, ..),
- daß die das qualitativ schlechtere Empfangssignal (es) abgebende Empfangseinrichtung (RX1, RX2, ..) zyklisch mit anderen Antenneneinrichtungen (AE1, AE2, ..) verbunden wird.

2. Empfangsstation nach Anspruch 1,
mit einer Einrichtung zum Bewerten der Qualität der Empfangssignale (es).

3. Empfangsstation nach Anspruch 2,
mit einer Selektion des qualitativ besseren Empfangssignals (es) durch den Kombinator (KOM).

4. Empfangsstation nach Anspruch 2,
mit einer additiven Verknüpfung der Empfangssignale (es) durch den Kombinator (KOM).

5. Empfangsstation nach einem der vorhergehenden Ansprüche,
bei der die Empfangseinrichtungen (RX1, RX2, ..) mit den Antenneneinrichtungen (AE1, AE2, ..) über Schalteinrichtungen (S) verbindbar sind, die die Empfangseinrichtungen (RX1, RX2, ..) jeweils mit einer der Antenneneinrichtungen (AE1, AE2, ..) zeitlagenabhängig verbinden.

6. Empfangsstation nach Anspruch 5,
bei der jede Schalteinrichtung (S) die Verbindung zu jeder Antenneneinrichtung (AE1, AE2, ..) herstellen kann.

7. Empfangsstation nach einem der vorhergehenden Ansprüche,
bei der durch die Steuereinrichtung (SE) eine Verbindung zwischen der das qualitativ beste Signal empfangenden Antenneneinrichtung (AE1, AE2, ..) und einer Empfangseinrichtung (RX1, RX2, ..) zwischen zwei Zeitlagen hergestellt wird.

8. Empfangsstation nach Anspruch 7,
bei der zur Bestimmung des qualitativ besten Empfangssignals (es) eine Prüfgröße über eine bestimmte Zeitspanne bestimmt wird.

9. Empfangsstation nach einem der vorhergehenden Ansprüche,
bei der einzelne Antenneneinrichtungen (AE1, AE2, ..) zusätzlich räumlich getrennt sind.

10. Empfangsstation nach einem der vorhergehenden Ansprüche,
bei der die Steuereinrichtung (SE) auch zur Steuerung der Verbindung zwischen Sendeeinrichtungen (TX1, TX2, ..) und Antenneneinrichtungen (AE1, AE2, ..) vorgesehen ist.

11. Empfangsstation nach einem der vorhergehenden Ansprüche,
bei der die Polarisation der Antenneneinrichtungen (AE1, AE2, ..) durch die Steuereinrichtung (SE) gesteuert elektronisch beeinflußbar ist.

## Claims

1. Receiving station for frame-oriented mobile communications systems
- having at least two antenna devices (AE1, AE2, ..) with different polarization directions,
- having a receiving device (RX1) for emitting conditioned received signals (es), which device can be connected to the antenna devices (AE1, AE2, ..),
characterized by
- at least one further receiving device (RX2, ..) for emitting conditioned received signals (es), which device can likewise be connected to the antenna devices (AE1, AE2, ..),
- at least one combiner (KOM) for producing a sum signal (ss) from the received signals (es),
- an evaluation device (BBE) for evaluating the sum signal (ss), and
- a control device (SE) for controlling the connection of the receiving devices (RX1, RX2, ..) to the antenna devices (AE1, AE2, ..),
- in such a manner that that receiving device (RX1, RX2, ..) which emits the received signal (es) whose quality is poorer is cyclically connected to other antenna devices (AE1, AE2, ..).

2. Receiving station according to Claim 1,
having a device for assessing the quality of the received signals (es).

3. Receiving station according to Claim 2,
having a selection by the combiner (KOM) of the received signal (es) whose quality is better.

4. Receiving station according to Claim 2,
having an additive link by the combiner (KOM) of the received signals (es).

5. Receiving station according to one of the preceding claims,
in which the receiving devices (RX1, RX2, ..) can be connected to the antenna devices (AE1, AE2, ..) via switching devices (S) which respectively connect the receiving devices (RX1, RX2 ..) to one of the antenna devices (AE1, AE2, ..) as a function of time slots.

6. Receiving station according to Claim 5,
in which each switching device (S) can produce the connection to each antenna device (AE1, AE2, ..).

7. Receiving station according to one of the preceding claims,
in which the control device (SE) produces a connection, between two time slots, between a receiving device (RX1, RX2, ..) and that antenna device (AE1, AE2, ..) which receives the signal with the best quality.

8. Receiving station according to Claim 7,
in which a test variable is determined over a specific time interval in order to determine the received signal (es) with the best quality.

9. Receiving station according to one of the preceding claims,
in which individual antenna devices (AE1, AE2, ..) are additionally physically separated.

10. Receiving station according to one of the preceding claims,
in which the control device (SE) is also provided for controlling the connection between transmitting devices (TX1, TX2, ..) and antenna devices (AE1, AE2, ..).

11. Receiving station according to one of the preceding claims,
in which the polarization of the antenna devices (AE1, AE2, ..) can be influenced, controlled electronically, by the control device (SE).

## Revendications

1. Station de réception pour des systèmes de communication mobiles basés sur des trames comportant
- au moins deux dispositifs formant antennes (AE1, AE2, ...) de directions de polarisation différentes,
- un dispositif de réception (RX1) qui est destiné à délivrer des signaux reçus préparés (es) et qui peut être relié aux dispositifs formant antennes (AE1, AE2, ...),
caractérisée par
- au moins un autre dispositif de réception (RX2, ...) qui est destiné à délivrer des signaux reçus préparés (es) et qui peut également être relié aux dispositifs formant antennes (AE1, AE2, ...),
- au moins un combineur (KOM) qui est destiné à produire un signal composite (ss) à partir des signaux reçus (es),
- un dispositif d'évaluation (BBE) qui est destiné à évaluer le signal composite (ss), et
- un dispositif de commande (SE) qui est destiné à commander la liaison des dispositifs de réception (RX1, RX2, ...) avec les dispositifs formant antennes (AE1, AE2, ...) de telle sorte que
- le dispositif de réception (RX1, RX2, ...) délivrant le signal reçu (es) de plus mauvaise qualité est relié de façon cyclique aux autres dispositifs formant antennes (AE1, AE2, ...).

2. Station de réception selon la revendication 1,
comportant un dispositif qui est destiné à évaluer la qualité des signaux reçus (es).

3. Station de réception selon la revendication 2,
comportant une sélection du signal reçu (es) de meilleure qualité par le combineur (KOM).

4. Station de réception selon la revendication 2,
comportant une combinaison additive des signaux reçus (es) par le combineur (KOM).

5. Station de réception selon l'une des revendications précédentes,
dans laquelle les dispositifs de réception (RX1, RX2, ...) peuvent être reliés aux dispositifs formant antennes (AE1, AE2, ...) par l'intermédiaire de dispositifs de commutation (S) qui relient les dispositifs de réception (RX1, RX2, ...) à chaque fois à l'un des dispositifs formant antennes (AE1, AE2, ...) en fonction de la position dans le temps.

6. Station de réception selon la revendication 5,
dans laquelle chaque dispositif de commutation (S) peut établir la liaison vers chaque dispositif formant antenne (AE1, AE2, ...).

7. Station de réception selon l'une des revendications précédentes,
dans laquelle le dispositif de commande (SE) permet d'établir entre deux positions temporelles une liaison entre le dispositif formant antenne (AE1, AE2, ...) recevant le signal de meilleure qualité et un dispositif de réception (RX1, RX2, ...).

8. Station de réception selon la revendication 7,
dans laquelle une grandeur de contrôle est déterminée sur un certain intervalle de temps pour déterminer le signal reçu (es) de meilleure qualité.

9. Station de réception selon l'une des revendications précédentes,
dans laquelle des dispositifs formant antennes (AE1, AE2, ...) individuels sont en plus séparés dans l'espace.

10. Station de réception selon l'une des revendications précédentes,
dans laquelle le dispositif de commande (SE) est aussi prévu pour la commande de la liaison entre des dispositifs d'émission (TX1, TX2, ...) et des dispositifs formant antennes (AE1, AE2, ...).

11. Station de réception selon l'une des revendications précédentes,
dans laquelle la polarisation des dispositifs formant antennes (AE1, AE2, ...) peut être influencée de façon électronique et commandée par le dispositif de commande (SE).
